# EUROPEAN PATENT APPLICATION

(11) **EP 4 750 005 A1**
(43) Date of publication of application: **27.05.2026**
(21) Application number: 24855239.0
(22) Date of filing: 04.03.2024
(51) Int. Cl.: H04L 12/46, H04L 45/50

(54) **PACKET TRANSMISSION METHOD AND APPARATUS, DEVICE, SYSTEM, AND STORAGE MEDIUM**

(30) Priority: 18.08.2023 CN 202311050704
(71) Applicant: Huawei Technologies Co., Ltd., Shenzhen, Guangdong 518129 (CN)
(72) Inventor: XU, Ting, Shenzhen, Guangdong 518129 (CN); WU, Hongjia, Shenzhen, Guangdong 518129 (CN); YU, Bin, Shenzhen, Guangdong 518129 (CN); QIU, Guohua, Shenzhen, Guangdong 518129 (CN); REN, Li, Shenzhen, Guangdong 518129 (CN); SONG, Yuezhong, Shenzhen, Guangdong 518129 (CN); WANG, Tongtong, Shenzhen, Guangdong 518129 (CN)
(74) Representative: Pfenning, Meinig & Partner mbB
(86) International application number: PCT/CN2024/079847
(87) International publication number: WO 2025/039508

(57) **Abstract**

This application relates to the field of communication technologies, and discloses a packet transmission method and apparatus, a device, a system, and a storage medium. For example, the method is performed by a first network device. When a network fault occurs in a ring network, the first network device receives a first packet, where the first network device is any network device that is in the ring network and that is adjacent to an occurrence position of the network fault, and the ring network includes a loop breakpoint used for blocking packet transmission; the first network device encapsulates a first outer tunnel packet header in the first packet to obtain a second packet, where the first outer tunnel packet header indicates that the second packet is transmitted based on a first tunnel, and a packet transmitted based on the first tunnel is not blocked by the loop breakpoint; and the first network device transmits the second packet based on the first tunnel. According to the method, the first packet is not affected by the network fault, and can cross the loop breakpoint, so that ring network path switching is implemented more quickly, and a packet loss caused by the network fault is reduced, to effectively reduce impact of the network fault on service performance.

## Description

This application claims priority to Chinese Patent Application No. 202311050704.5, filed on August 18, 2023 and entitled "PACKET TRANSMISSION METHOD AND APPARATUS, DEVICE, SYSTEM, AND STORAGE MEDIUM", which is incorporated herein by reference in its entirety.

### TECHNICAL FIELD

This application relates to the field of communication technologies, and in particular, to a packet transmission method and apparatus, a device, a system, and a storage medium.

### BACKGROUND

As communication technologies develop, it is increasingly common that a ring network exists in a network topology. The ring network is a network of a ring topology including a plurality of network devices, and the ring network may be referred to as a ring network for short. A manner of processing a broadcast packet by a network device is to replicate and spread the broadcast packet to all interfaces other than an interface through which the broadcast packet is received. Therefore, a broadcast packet entering a ring network is continuously replicated and spread by all network devices in the ring network, so that a large quantity of broadcast packets exist in the entire ring network within very short time, and a large quantity of bandwidth resources and a large quantity of processing resources of the network devices are occupied. The foregoing process is a broadcast storm. Therefore, a ring network path switching technology emerges to avoid occurrence of the broadcast storm in the ring network.

The ring network path switching technology is to set a loop breakpoint in the ring network when the ring network is in a fault-free state, and the loop breakpoint is used for blocking packet transmission, to avoid occurrence of the broadcast storm. When a network fault is found in the ring network, a function of the loop breakpoint is disabled, so that a packet can be transmitted through the loop breakpoint, a message about the network fault is notified in the ring network, a forwarding entry on each network device in the ring network is refreshed based on the network fault, and a refreshed forwarding entry is used for switching a packet affected by the fault to an alternate path for transmission, where the alternate path is a path including the loop breakpoint.

However, in the ring network path switching technology, the packet affected by the fault can be switched to the alternate path for transmission only after time for fault discovery, time for fault message notification, and time for network device table refreshing elapse. In other words, before path switching is implemented, the packet affected by the fault is still transmitted based on the forwarding entry that is not refreshed, leading to a loss of the packet affected by the fault.

### SUMMARY

This application provides a packet transmission method and apparatus, a device, a system, and a storage medium, to transmit a packet based on a tunnel in a ring network in which a network fault occurs.

According to a first aspect, a packet transmission method is provided. For example, the method is performed by a first network device. When a network fault occurs in a ring network, the first network device receives a first packet, where the first network device is any network device that is in the ring network and that is adjacent to an occurrence position of the network fault, and the ring network includes a loop breakpoint used for blocking packet transmission; the first network device encapsulates a first outer tunnel packet header in the first packet to obtain a second packet, where the first outer tunnel packet header indicates that the second packet is transmitted based on a first tunnel, and a packet transmitted based on the first tunnel is not blocked by the loop breakpoint; and the first network device transmits the second packet based on the first tunnel.

In the method, when the network fault occurs in the ring network, the first packet can be quickly switched to the first tunnel for transmission by encapsulating the first outer tunnel packet header, so that the first packet is not affected by the network fault. Because the first tunnel is not blocked by the loop breakpoint in the ring network, the first packet can cross the loop breakpoint. In comparison with a path switching method in which a fault is notified and a forwarding table is refreshed, in the method, time for fault message notification and time for network device table refreshing are saved, ring network path switching is implemented more quickly, and a packet loss caused by the network fault is reduced, to effectively reduce impact of the network fault on service performance.

In a possible implementation, each port between the first network device and the loop breakpoint is configured with the first tunnel, or each port of each network device in the ring network is configured with the first tunnel; and transmitting the second packet based on the first tunnel includes: transmitting, based on the first tunnel, the second packet to a second network device corresponding to the loop breakpoint, where the second network device is configured to decapsulate the first outer tunnel packet header in the second packet to obtain the first packet. In this way, the first packet exits the first tunnel through the second network device, so that the first packet transmitted based on the first tunnel is not affected by the network fault, and can cross the loop breakpoint, to avoid a loss of the first packet caused by the network fault.

In a possible implementation, each port of each network device in the ring network is configured with the first tunnel, or each port between the first network device and a third network device is configured with the first tunnel through the loop breakpoint, and the third network device is another network device that is in the ring network and that is adjacent to the occurrence position of the network fault; and transmitting the second packet based on the first tunnel includes: transmitting the second packet to the third network device through the loop breakpoint based on the first tunnel, where the third network device is configured to decapsulate the first outer tunnel packet header in the second packet to obtain the first packet. In this way, the first packet exits the first tunnel through the third network device, so that the first packet transmitted based on the first tunnel is not affected by the network fault, and can cross the loop breakpoint, to avoid a loss of the first packet caused by the network fault.

In a possible implementation, the first network device further receives a third packet in which a second outer tunnel packet header is encapsulated, where the second outer tunnel packet header indicates that the third packet is transmitted based on a second tunnel, and a packet transmitted based on the second tunnel is not blocked by the loop breakpoint. When the second outer tunnel packet header carries mark information, the first network device decapsulates the second outer tunnel packet header in the third packet to obtain a fourth packet, and transmits the fourth packet, where the mark information indicates that the third packet passes through the loop breakpoint. The first network device discards the third packet when the second outer tunnel packet header does not carry the mark information. The first network device can identify, by using the mark information, a packet that does not pass through the loop breakpoint and in which an outer tunnel packet header is encapsulated. The encapsulated outer tunnel packet header indicates that a network fault occurs in a direction of receiving the packet, and the first network device, as a network device adjacent to an occurrence position of the network fault, indicates that the network fault also occurs in a direction of sending the packet. Therefore, if the first network device does not discard the third packet, the third packet is cyclically sent in the ring network.

According to a second aspect, a packet transmission method is provided. For example, the method is performed by a second network device. The second network device receives a second packet sent by a first network device, where the first network device is any network device that is in a ring network and that is adjacent to an occurrence position of a network fault, the ring network includes a loop breakpoint used for blocking packet transmission, the second network device is a network device corresponding to the loop breakpoint, a first outer tunnel packet header is encapsulated in the second packet, the first outer tunnel packet header indicates that the second packet is transmitted based on a first tunnel, and a packet transmitted based on the first tunnel is not blocked by the loop breakpoint. When each port between the first network device and the loop breakpoint is configured with the first tunnel, the second network device decapsulates the first outer tunnel packet header in the second packet to obtain a first packet, and transmits the first packet.

In the method, when the network fault occurs in the ring network, the first packet affected by the fault can be reversely transmitted to the second network device based on the first tunnel, and exits the first tunnel through the second network device, so that the first packet is not affected by the network fault, and can cross the loop breakpoint, to avoid a loss of the first packet caused by the network fault.

In a possible implementation, after the second network device receives the second packet sent by the first network device, when each port of each network device in the ring network is configured with the first tunnel, or when each port between the first network device and a third network device is configured with the first tunnel through the loop breakpoint in the ring network, the second network device adds mark information to the first outer tunnel packet header to obtain a fifth packet, where the mark information indicates that the fifth packet passes through the loop breakpoint, and the third network device is another network device that is in the ring network and that is adjacent to the occurrence position of the network fault; and transmits the fifth packet. The third network device can identify, by using the mark information, a packet that does not pass through the loop breakpoint and in which an outer tunnel packet header is encapsulated. The encapsulated outer tunnel packet header indicates that a network fault occurs in a direction of receiving the packet, and the first network device, as a network device adjacent to an occurrence position of the network fault, indicates that the network fault also occurs in a direction of sending the packet. Therefore, if the first network device does not discard the second packet, the second packet is cyclically sent in the ring network.

In any one of the possible implementations of the first aspect and the second aspect, before the network fault occurs in the ring network, configuration information of the first tunnel delivered by a control device is further received, where the configuration information of the first tunnel is used for transmitting a packet based on the first tunnel; or when the network fault occurs in the ring network, configuration information of the first tunnel delivered by a control device is further received.

According to a third aspect, a packet transmission apparatus is provided. The apparatus includes: a transceiver module, configured to perform a receiving and/or sending-related operation performed by the first network device in any one of the first aspect or the possible implementations of the first aspect; and a processing module, configured to perform an operation other than the receiving and/or sending-related operation performed by the first network device in any one of the first aspect or the possible implementations of the first aspect.

In a possible implementation, the transceiver module includes a receiving module and/or a sending module. The receiving module is configured to perform a receiving-related operation, and the sending module is configured to perform a sending-related operation.

In a possible implementation, the transceiver module is configured to: when a network fault occurs in a ring network, receive a first packet, where the first network device is any network device that is in the ring network and that is adjacent to an occurrence position of the network fault, and the ring network includes a loop breakpoint used for blocking packet transmission. The processing module is configured to encapsulate a first outer tunnel packet header in the first packet to obtain a second packet, where the first outer tunnel packet header indicates that the second packet is transmitted based on a first tunnel, and a packet transmitted based on the first tunnel is not blocked by the loop breakpoint. The transceiver module is further configured to transmit the second packet based on the first tunnel.

In a possible implementation, each port between the first network device and the loop breakpoint is configured with the first tunnel, or each port of each network device in the ring network is configured with the first tunnel. The transceiver module is configured to transmit, based on the first tunnel, the second packet to a second network device corresponding to the loop breakpoint, where the second network device is configured to decapsulate the first outer tunnel packet header in the second packet to obtain the first packet.

In a possible implementation, each port of each network device in the ring network is configured with the first tunnel, or each port between the first network device and a third network device is configured with the first tunnel through the loop breakpoint, and the third network device is another network device that is in the ring network and that is adjacent to the occurrence position of the network fault. The transceiver module is configured to transmit the second packet to the third network device through the loop breakpoint based on the first tunnel, where the third network device is configured to decapsulate the first outer tunnel packet header in the second packet to obtain the first packet.

In a possible implementation, the transceiver module is further configured to receive a third packet in which a second outer tunnel packet header is encapsulated, where the second outer tunnel packet header indicates that the third packet is transmitted based on a second tunnel, and a packet transmitted based on the second tunnel is not blocked by the loop breakpoint. The processing module is further configured to: when the second outer tunnel packet header carries mark information, decapsulate the second outer tunnel packet header in the third packet to obtain a fourth packet, where the mark information indicates that the third packet passes through the loop breakpoint. The transceiver module is further configured to transmit the fourth packet.

In a possible implementation, the processing module is further configured to discard the third packet when the second outer tunnel packet header does not carry the mark information.

According to a fourth aspect, a packet transmission apparatus is provided. The apparatus includes: a transceiver module, configured to perform a receiving and/or sending-related operation performed by the second network device in any one of the second aspect or the possible implementations of the second aspect; and a processing module, configured to perform an operation other than the receiving and/or sending-related operation performed by the second network device in any one of the second aspect or the possible implementations of the second aspect.

In a possible implementation, the transceiver module includes a receiving module and/or a sending module. The receiving module is configured to perform a receiving-related operation, and the sending module is configured to perform a sending-related operation.

In a possible implementation, the transceiver module is configured to receive a second packet sent by a first network device, where the first network device is any network device that is in a ring network and that is adjacent to an occurrence position of a network fault, the ring network includes a loop breakpoint used for blocking packet transmission, the second network device is a network device corresponding to the loop breakpoint, a first outer tunnel packet header is encapsulated in the second packet, the first outer tunnel packet header indicates that the second packet is transmitted based on a first tunnel, and a packet transmitted based on the first tunnel is not blocked by the loop breakpoint. The processing module is configured to: when each port between the first network device and the loop breakpoint is configured with the first tunnel, decapsulate the first outer tunnel packet header in the second packet to obtain the first packet. The transceiver module is further configured to transmit the first packet.

In a possible implementation, the processing module is further configured to: when each port of each network device in the ring network is configured with the first tunnel, or when each port between the first network device and a third network device is configured with the first tunnel through the loop breakpoint in the ring network, add mark information to the first outer tunnel packet header to obtain a fifth packet, where the mark information indicates that the fifth packet passes through the loop breakpoint, and the third network device is another network device that is in the ring network and that is adjacent to the occurrence position of the network fault. The transceiver module is further configured to transmit the fifth packet.

In any one of the possible implementations of the third aspect and the fourth aspect, the transceiver module is further configured to: before the network fault occurs in the ring network, receive configuration information of the first tunnel delivered by a control device, where the configuration information of the first tunnel is used for transmitting a packet based on the first tunnel; or the transceiver module is further configured to: when the network fault occurs in the ring network, receive configuration information of the first tunnel delivered by a control device.

According to a fifth aspect, a network device is provided. The network device includes a processor, the processor is coupled to a memory, the memory stores at least one program instruction or code, and the at least one program instruction or the code is loaded and executed by the processor, to enable the network device to implement the packet transmission method according to either of the first aspect and the second aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to a sixth aspect, a packet transmission system is provided. The packet transmission system includes a first network device and a second network device.

The first network device is configured to perform the method according to any one of the first aspect or the possible implementations of the first aspect, and the second network device is configured to perform the method according to any one of the second aspect or the possible implementations of the second aspect.

According to a seventh aspect, a computer-readable storage medium is provided. The storage medium stores at least one instruction, and the instruction is loaded and executed by a processor, to enable a computer to implement the method according to any one of the first aspect or the possible implementations of the first aspect, or to implement the method according to any one of the second aspect or the possible implementations of the second aspect.

According to an eighth aspect, a computer program (product) is provided. The computer program (product) includes computer program code, and when the computer program code is run on a computer, the computer is enabled to perform the methods in the foregoing aspects.

According to a ninth aspect, a chip is provided, including a processor. The processor is configured to invoke, from a memory, instructions stored in the memory and run the instructions, to enable a communication device in which the chip is installed to perform the methods in the foregoing aspects.

According to a tenth aspect, another chip is provided. The chip includes an input interface, an output interface, a processor, and a memory. The input interface, the output interface, the processor, and the memory are connected to each other through an internal connection path. The processor is configured to execute code in the memory, and when the code is executed, the processor is configured to perform the methods in the foregoing aspects.

It should be understood that, for beneficial effects achieved by the technical solutions of the third aspect to the tenth aspect and corresponding possible implementations of the technical solutions of the third aspect to the tenth aspect in this application, refer to the technical effects of the first aspect, the second aspect, and the corresponding possible implementations of the first aspect and the second aspect. Details are not described herein again.

### BRIEF DESCRIPTION OF DRAWINGS

FIG. 1 is a diagram of packet transmission in a ring network according to an embodiment of this application;
FIG. 2 is a flowchart of a packet transmission method according to an embodiment of this application;
FIG. 3 is a diagram of a tunnel configuration in a ring network according to an embodiment of this application;
FIG. 4 is a diagram of another tunnel configuration in a ring network according to an embodiment of this application;
FIG. 5 is a diagram of another tunnel configuration in a ring network according to an embodiment of this application;
FIG. 6 is a diagram of packet transmission in a ring network according to an embodiment of this application;
FIG. 7 is another diagram of packet transmission in a ring network according to an embodiment of this application;
FIG. 8 is a flowchart of another packet transmission method according to an embodiment of this application;
FIG. 9 is an interaction diagram of a packet transmission method according to an embodiment of this application;
FIG. 10 is a diagram of a structure of a packet transmission apparatus according to an embodiment of this application;
FIG. 11 is a diagram of a structure of a network device according to an embodiment of this application; and
FIG. 12 is a diagram of a structure of another network device according to an embodiment of this application.

### DESCRIPTION OF EMBODIMENTS

To make objectives, technical solutions, and advantages of this application clearer, the following further describes implementations of this application in detail with reference to the accompanying drawings.

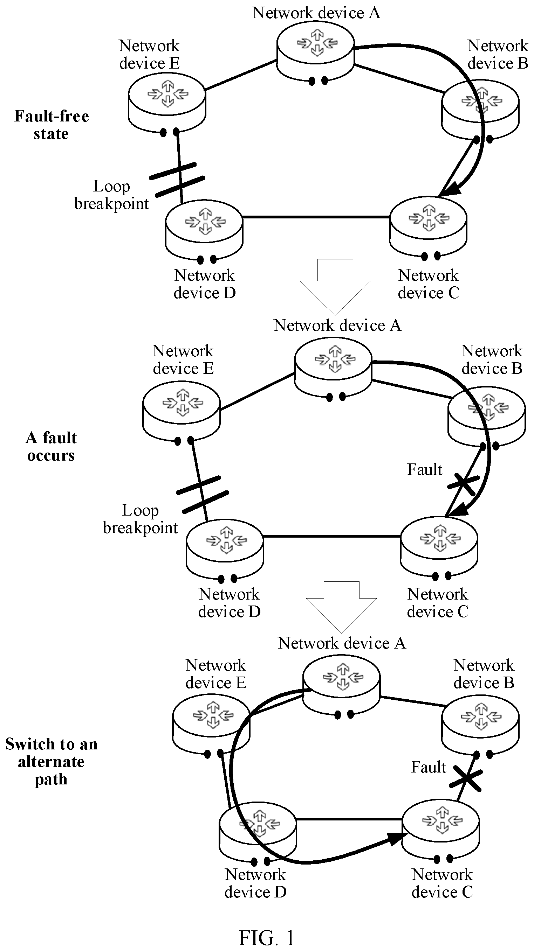

With widespread application of a ring network, a packet transmission method in the ring network needs to be provided, to avoid occurrence of a broadcast storm in the ring network. A ring network path switching technology is used as an example. Refer to a diagram of packet transmission in a ring network shown in FIG. 1. A loop breakpoint is set between a network device E and a network device D, and the loop breakpoint is used for blocking packet transmission, that is, used for avoiding occurrence of a broadcast storm in the ring network. For example, for a broadcast packet, if transmission of the broadcast packet is blocked by the loop breakpoint, the broadcast packet is discarded, and a network device in the ring network does not replicate or spread the broadcast packet infinitely, to avoid occurrence of the broadcast storm.

As shown in FIG. 1, for a data flow sent by a network device A to a network device C, when the ring network is in a fault-free state, the data flow is transmitted from the network device A to the network device C through a network device B. If a fault occurs on a link between the network device B and the network device C, transmission of the data flow is affected by the fault, leading to a packet loss. In this case, in the ring network, a function of the loop breakpoint is disabled, that is, the loop breakpoint is deactivated, and the data flow is switched to an alternate path for transmission, to be specific, the data flow is transmitted from the network device A to the network device C through the network device E and the network device D, to effectively avoid a packet loss caused by the fault in the ring network.

The ring network path switching technology includes, but is not limited to, an ethernet ring protection switching (ethernet ring protection switching, ERPS) technology, a media redundancy protocol (media redundancy protocol, MRP), a distributed redundancy protocol (distributed redundancy protocol, DRP), and the like. Regardless of a ring network path switching technology, a packet affected by a fault can be switched to an alternate path for transmission only after time for fault discovery, time for fault message notification, and time for network device table refreshing elapse. In other words, before ring network path switching is implemented, the packet affected by the fault is still transmitted based on a forwarding entry that is not refreshed, leading to a loss of the packet affected by the fault.

An embodiment of this application provides a packet transmission method. On a basis that a ring network includes a loop breakpoint used for blocking packet transmission, a tunnel required for ring network path switching is established, so that a packet affected by a fault is directly switched to the tunnel for transmission when the fault occurs. This avoids occurrence of a broadcast storm in the ring network, and saves time for fault message notification and network device table refreshing. In this way, time required for the ring network path switching is reduced to time for fault discovery, to shorten time required for the ring network path switching, and minimize impact of the fault in the ring network on service performance.

The packet transmission method provided in this embodiment of this application may be applied to any ring network scenario involving a network device group, including but not limited to an access layer ring network, a convergence layer ring network, or a core layer ring network of a local area network; an access layer ring network, a convergence layer ring network, or a core layer ring network of a metropolitan area network; and an access layer ring network, a convergence layer ring network, or a core layer ring network of a backbone network. Optionally, the network device includes a switch, a router, or the like. Optionally, the packet transmission method may be performed by a network device, or may be performed by some components on the network device, for example, a board or a line card on the network device, or may be performed by a functional module on the network device, or may be performed by a chip configured to implement the method. An execution entity of the method is not specifically limited in this embodiment of this application.

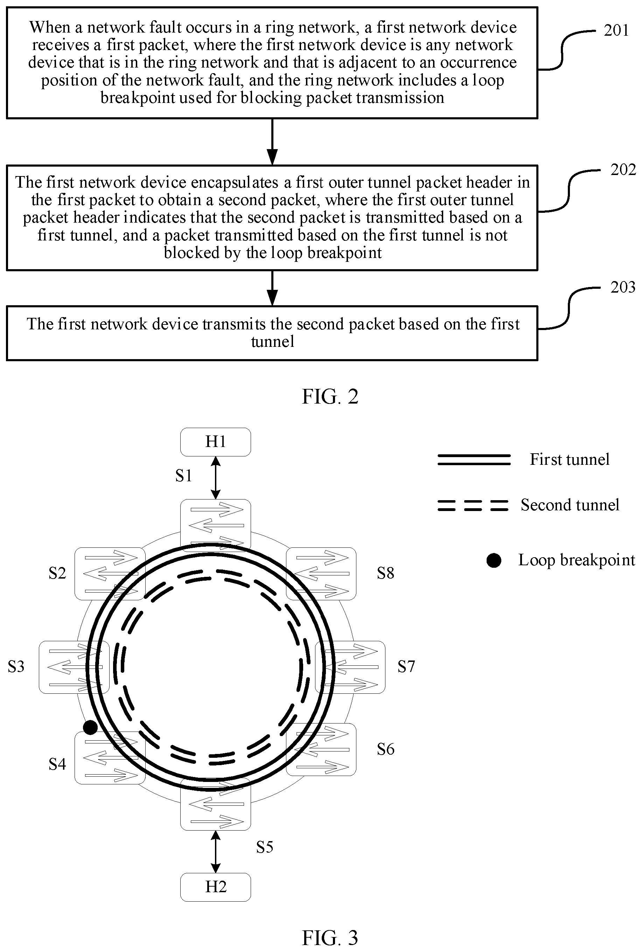

FIG. 2 is a flowchart of a packet transmission method according to an embodiment of this application. For example, the method is performed by a first network device. The first network device may be any network device in a ring network. As shown in FIG. 2, the packet transmission method includes but is not limited to the following step 201 to step 203.

Step 201: When a network fault occurs in the ring network, the first network device receives a first packet, where the first network device is any network device that is in the ring network and that is adjacent to an occurrence position of the network fault, and the ring network includes a loop breakpoint used for blocking packet transmission.

In this embodiment of this application, the ring network includes the loop breakpoint used for blocking the packet transmission, so that occurrence of a broadcast storm in the ring network can be avoided by the loop breakpoint. For a setting of the loop breakpoint, refer to related descriptions in ERPS, an MRP, or a DRP. Details are not described in this embodiment of this application. For example, the loop breakpoint may be manually configured in the ring network, or the loop breakpoint may be determined through auto-negotiation of each network device in the ring network. There may be one or more loop breakpoints. This is not limited in this embodiment of this application.

A type of the network fault is not limited in this embodiment of this application. The network fault includes but is not limited to a port fault, a link fault, a software configuration fault, and the like. When the network fault is the link fault, and the occurrence position of the network fault is a link between two network devices, network devices adjacent to the occurrence position of the network fault are the two network devices connected to the link, for example, the network device B and the network device C shown in FIG. 1. When the network fault is the software configuration fault, and the occurrence position of the network fault is a network device itself, network devices adjacent to the occurrence position of the network fault are two network devices connected to the faulty network device. Using FIG. 1 as an example, if the network device B is faulty, network devices adjacent to the occurrence position of the fault include the network device A and the network device C.

Because the first network device is adjacent to the occurrence position of the network fault, the first network device can quickly sense occurrence of the fault. A method for sensing a fault by the first network device is not limited in this embodiment of this application. For example, the first network device senses a fault based on a link state, a port state, or the like, or the first network device senses a fault by sending a detection message to adjacent network devices and based on feedback of the adjacent network devices for the detection message. Optionally, the first network device may receive a first packet sent by a terminal device or a network device outside the ring network, and the first network device is a ring entry point of the first packet; or the first network device may receive a first packet sent by a network device in the ring network.

Step 202: The first network device encapsulates a first outer tunnel packet header in the first packet to obtain a second packet, where the first outer tunnel packet header indicates that the second packet is transmitted based on a first tunnel, and a packet transmitted based on the first tunnel is not blocked by the loop breakpoint.

Because the network fault occurs in the ring network, and the first network device is adjacent to the occurrence position of the network fault, if the first network device continues to send the first packet based on an original forwarding entry after receiving the first packet, the first packet is lost due to the network fault. In this embodiment of this application, the first network device encapsulates the first outer tunnel packet header in the first packet, and switches a transmission path of the first packet to the first tunnel by using the first outer tunnel packet header, where the first tunnel is not affected by the loop breakpoint. That the first tunnel is not affected by the loop breakpoint means that a port at the loop breakpoint is configured with the first tunnel. To be specific, when the port at the loop breakpoint receives the second packet in which the first outer tunnel packet header is encapsulated, because routing information of the first tunnel is configured, the second packet can be forwarded through the first tunnel based on the routing information of the first tunnel, and is not discarded due to the configuration of the loop breakpoint. Therefore, the method can implement path switching quickly without waiting for fault notification and refreshing a forwarding table, to shorten time required for ring network path switching.

Before the first outer tunnel packet header is encapsulated in the first packet, a tunnel needs to be configured in the ring network first. Optionally, a tunnel may be configured in advance before a network fault occurs in the ring network. For example, the tunnel is configured when a ring network architecture is formed. Alternatively, a tunnel may be temporarily configured when a network fault occurs in the ring network. A manner of configuring a tunnel may be that a control device delivers configuration information of a corresponding tunnel to each network device in the ring network. In this case, the first network device receives configuration information of the first tunnel delivered by the control device, where the configuration information of the first tunnel is used by the first network device to transmit a packet based on the first tunnel.

Optionally, a tunneling protocol used for configuring a tunnel is not limited in this embodiment of this application. The tunneling protocol is used for re-encapsulating a to-be-transmitted packet into a new packet header for sending, that is, encapsulating an outer tunnel packet header in the packet, where the outer tunnel packet header includes routing information, so that the packet in which the outer tunnel packet header is encapsulated can be transmitted in a network. For example, the tunneling protocol includes but is not limited to a point-to-point tunneling protocol (point-to-point tunneling protocol, PPTP), a layer two tunneling protocol (layer two tunneling protocol, L2TP), or a QinQ protocol. QinQ is short for 802.1Q-in-802.1Q. QinQ is also referred to as virtual local area network stacking (virtual local area network stacking, VLAN Stacking) or a double (Double) VLAN. VLAN space is expanded by adding a layer of 802.1Q tag to a packet that carries an 802.1Q tag.

A manner of encapsulating the first outer tunnel packet header is not limited in this embodiment of this application. Different encapsulation manners of the first outer tunnel packet header may be flexibly used for different tunneling protocols. For example, using the QinQ protocol as an example, a manner of encapsulating the first outer tunnel packet header in the first packet is to encapsulate one layer of VLAN tag into an outer layer of the first packet, to implement routing and forwarding by using the VLAN tag that is encapsulated at the outermost layer.

A packet is transmitted in the ring network in both clockwise and counterclockwise directions. Therefore, tunnels in the clockwise and counterclockwise directions need to be configured during tunnel configuration. For example, a tunnel in the counterclockwise direction may be referred to as a first tunnel, and a tunnel in the clockwise direction may be referred to as a second tunnel. The first tunnel and the second tunnel may be two independent tunnels, or the first tunnel and the second tunnel may be a same bidirectional tunnel. In this embodiment of this application, an implementation of configuring a tunnel in the ring network is not limited, so that when a fault occurs in the ring network, a packet affected by the fault can be switched to a tunnel for normal transmission.

Optionally, a result of configuring a tunnel in the ring network may be that all ports of all network devices in the ring network are configured with a first tunnel and a second tunnel, so that all ports in the ring network allow a packet in which an outer tunnel packet header is encapsulated to pass through, without being blocked by the loop breakpoint. For example, refer to a diagram of a tunnel configuration shown in FIG. 3. Network devices included in the ring network are a switch (switch, S) 1, S2, S3, S4, S5, S6, S7, and S8, a host (host, H) H1 is a terminal, a server, or a switch connected to S1, H2 is a terminal, a server, or a switch connected to S5, and a loop breakpoint is set at a first port that is on S4 and that is used for a connection to S3. For a packet sent from H1 to H2, the packet enters the ring network from S1, that is, S1 is a ring entry point, and the packet is sent to H2 from S5 through S8, S7, and S6, that is, S5 is a ring exit point. All ports in the S1, S2, S3, S4, S5, S6, S7, and S8 are configured with a first tunnel and a second tunnel. Therefore, the first tunnel and the second tunnel form a closed loop in the ring network, so that for a fault at any position in the ring network, a packet affected by the fault can be switched to the first tunnel or the second tunnel for transmission.

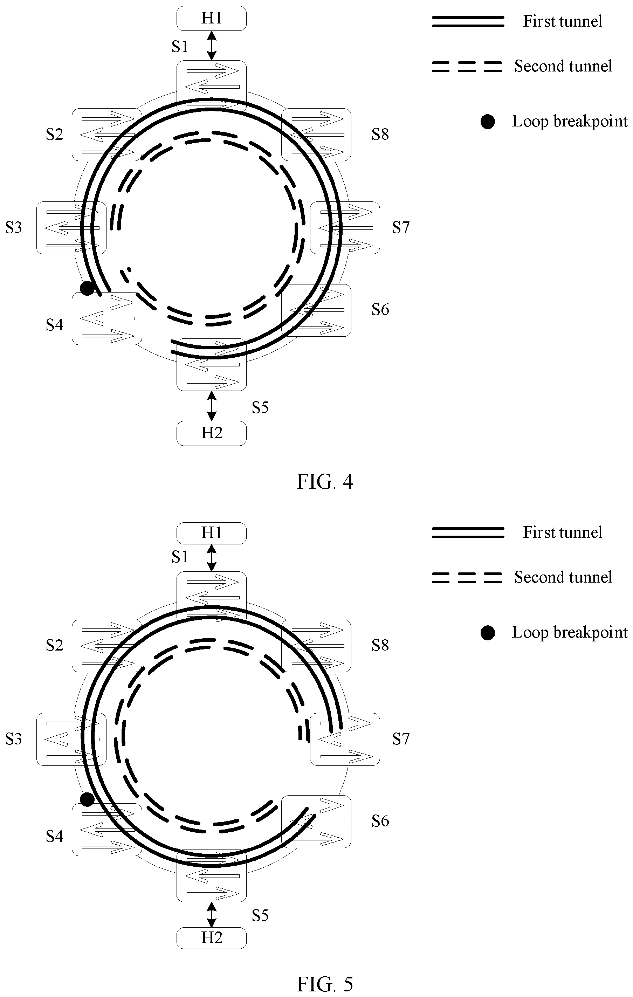

A purpose of configuring a tunnel in the ring network is to enable a packet affected by a fault to be reversely transmitted and pass through the loop breakpoint, so that ports on two sides of the loop breakpoint may be selectively configured with a first tunnel or a second tunnel. For example, refer to a diagram of a tunnel configuration shown in FIG. 4. A port on S3 in the clockwise direction of the loop breakpoint is not configured with a second tunnel, and a port on S4 in the counterclockwise direction of the loop breakpoint is not configured with a first tunnel, that is, the first tunnel and the second tunnel do not form a closed loop in the ring network. However, a port at a gap does not send a packet to the loop breakpoint, ensuring that during the ring network path switching, no packet enters the tunnels through the port at the gap.

In a possible implementation, a result of configuring a tunnel in the ring network may alternatively be that one pair of a first tunnel and a second tunnel is established for each pair of adjacent network devices in the ring network. For example, refer to a diagram of a tunnel configuration shown in FIG. 5. For example, adjacent network devices are S7 and S6. A start point of the first tunnel is a port that is on S7 and that is connected to S8, an end point of the first tunnel is a port that is on S6 and that is connected to S5, a start point of the second tunnel is the port that is on S6 and that is connected to S5, and an end point of the second tunnel is the port that is on S7 and that is connected to S8. In a scenario in which a tunnel is temporarily configured when a network fault occurs in the ring network, because a position of the network fault has been determined, only one pair of a first tunnel and a second tunnel corresponding to network devices on two sides of the position of the network fault may be temporarily delivered. For example, if the position of the network fault is on a link between S6 and S7, the network devices on the two sides of the position of the network fault are S6 and S7. Therefore, the first tunnel and the second tunnel that correspond to S6 and S7 shown in FIG. 5 may be configured.

Step 203: The first network device transmits the second packet based on the first tunnel.

In this embodiment of this application, because the first tunnel and the second tunnel that are not blocked by the loop breakpoint are already configured in the ring network, when a network fault occurs in the ring network, a packet that is transmitted in the clockwise direction and that is affected by the fault in the ring network may be switched to the first tunnel for reverse transmission, and a packet that is transmitted in the counterclockwise direction and that is affected by the fault in the ring network may be switched to the second tunnel for reverse transmission, so that the ring network path switching can be implemented quickly, and impact of the fault in the ring network on service performance is reduced. In this embodiment of this application, an example in which the first packet is a packet transmitted in the clockwise direction is used for description. For how to switch a packet transmitted in the counterclockwise direction to the second tunnel, refer to a manner of switching the first packet to the first tunnel. Details are not described again in this embodiment of this application.

For different tunnel configurations, the first network device transmits the second packet based on the first tunnel in different manners. The following uses an example in which the first packet is a packet sent from H1 to H2 in the clockwise direction, the first network device is S7, and the network fault occurs on the link between S7 and S6 to describe an implementation of transmitting the second packet based on the first tunnel.

In a tunnel configuration scenario shown in FIG. 3, each port of each network device in the ring network is configured with the first tunnel. In a tunnel configuration scenario shown in FIG. 4 or FIG. 5, each port between the first network device and the loop breakpoint is configured with the first tunnel. Therefore, a manner of transmitting the second packet based on the first tunnel may be as follows: Based on the first tunnel, the second packet is transmitted to the second network device corresponding to the loop breakpoint, where the second network device corresponding to the loop breakpoint is S4; and after receiving the second packet, the second network device decapsulates the first outer tunnel packet header in the second packet to obtain the first packet, and continues to transmit the first packet based on the forwarding entry used before the fault occurs.

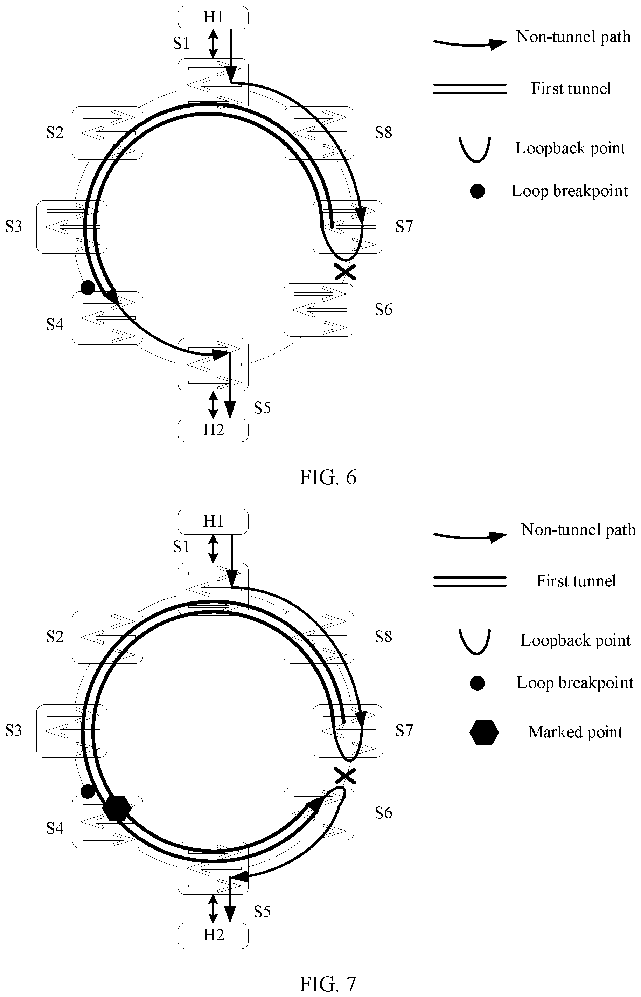

For example, refer to a diagram of packet transmission shown in FIG. 6. H1 sends the first packet to S1. Based on a forwarding entry used before a fault occurs, S1 and S8 can send the first packet to S7 based on a non-tunnel path. After receiving the first packet, S7 finds a fault on the link between S7 and S6, and S7 encapsulates the first outer tunnel packet header in the first packet to obtain the second packet. S7 sends the second packet to the first tunnel for reverse transmission, that is, S7 is an ingress tunnel point and also a loopback point for the first packet. Because the first outer tunnel packet header indicates that the second packet is transmitted based on the first tunnel, S8, S1, S2, and S3 can send the second packet to S4 corresponding to the loop breakpoint. S4 decapsulates the first outer tunnel packet header in the second packet to obtain the first packet, that is, S4 is an egress tunnel point for the first packet. S4 sends the first packet to S5 based on a non-tunnel path, and then S5 sends the first packet to H2. In this way, when a fault occurs in the ring network, the first packet implements path switching quickly through the first tunnel, so that the first packet is not affected by the network fault, and can cross the loop breakpoint, to avoid a loss of the first packet caused by the network fault.

In the tunnel configuration scenario shown in FIG. 3, each port of each network device in the ring network is configured with the first tunnel. In the tunnel configuration scenario shown in FIG. 5, each port between the first network device and a third network device is configured with the first tunnel through the loop breakpoint. The third network device is another network device that is in the ring network and that is adjacent to the occurrence position of the network fault, and the third network device is S6 in FIG. 3 or FIG. 5. Therefore, a manner of transmitting the second packet based on the first tunnel may be as follows: The second packet is transmitted to the third network device based on the first tunnel through the loop breakpoint; and after receiving the second packet, the third network device decapsulates the first outer tunnel packet header in the second packet to obtain the first packet, and continues to transmit the first packet based on the forwarding entry used before the fault occurs.

For example, refer to a diagram of packet transmission shown in FIG. 7. H1 sends the first packet to S1. Based on a forwarding entry used before a fault occurs, S1 and S8 can send the first packet to S7 based on a non-tunnel path. After receiving the first packet, S7 finds a fault on the link between S7 and S6, and S7 encapsulates the first outer tunnel packet header in the first packet to obtain the second packet. S7 sends the second packet to the first tunnel for reverse transmission, that is, S7 is an ingress tunnel point and also a loopback point for the first packet. Because the first outer tunnel packet header indicates that the second packet is transmitted based on the first tunnel, S8, S1, S2, S3, S4, and S5 can send the second packet to the third network device S6. S6 decapsulates the first outer tunnel packet header in the second packet to obtain the first packet, that is, S6 is an egress tunnel point for the first packet. S6 reversely sends the first packet to S5 based on a non-tunnel path, that is, S6 is also a loopback point for the first packet, and then S5 sends the first packet to H2. In this way, when a fault occurs in the ring network, the first packet implements path switching quickly through the first tunnel, so that the first packet is not affected by the network fault, and can cross the loop breakpoint, to avoid a loss of the first packet caused by the network fault.

When the third network device is used as an egress tunnel point shown in FIG. 7, in a process of forwarding the second packet, the second network device corresponding to the loop breakpoint adds a mark to the first outer tunnel packet header of the second packet, that is, the second network device corresponding to the loop breakpoint is a marked point. In other words, the first outer tunnel packet header of the second packet carries mark information, and the mark information indicates that the second packet has passed through the loop breakpoint. In this case, after receiving the second packet, the third network device first determines whether the first outer tunnel packet header of the second packet carries the mark information. When the first outer tunnel packet header carries the mark information, the first outer tunnel packet header in the second packet is decapsulated to obtain the first packet. When the first outer tunnel packet header does not carry the mark information, it indicates that the second packet does not pass through the loop breakpoint, and the second packet is directly discarded, or the second packet is not processed.

The third network device can identify, by using the mark information, a packet that does not pass through the loop breakpoint and in which an outer tunnel packet header is encapsulated. The encapsulated outer tunnel packet header indicates that a network fault occurs in a direction of receiving the packet, and the first network device, as a network device adjacent to an occurrence position of the network fault, indicates that the network fault also occurs in a direction of sending the packet. Therefore, if the first network device does not discard the second packet, the second packet is cyclically sent in the ring network. For example, in FIG. 7, if a fault occurs on the link between S7 and S6, and a fault also occurs on a link between S2 and S3, S2 is also a network device adjacent to an occurrence position of a network fault, and S2 also performs the packet transmission method shown in FIG. 2. When receiving the second packet in which the first outer tunnel packet header is encapsulated, S2 discards the second packet on a basis that the first outer tunnel packet header does not carry the mark information. If S2 decapsulates the first outer tunnel packet header to obtain the first packet and transmits the first packet, because the fault occurs on the link between S2 and S3, S2 further re-encapsulates a second outer tunnel packet header in the first packet, and transmits the first packet based on the second tunnel. Similarly, S7 also performs an operation similar to that of S2, causing the packet to be transmitted cyclically between S2 and S7.

In addition, for the third network device in the ring network, for example, a fourth packet is sent by H2 to H1. When a network fault occurs in the ring network, after receiving the fourth packet, the third network device encapsulates the second outer tunnel packet header in the fourth packet to obtain a third packet, where the second outer tunnel packet header indicates that the third packet is transmitted based on the second tunnel, and a packet transmitted based on the second tunnel is not blocked by the loop breakpoint; and the third network device transmits the third packet based on the second tunnel. For an implementation in which the third network device transmits the third packet based on the second tunnel, refer to an implementation in which the first network device transmits the second packet based on the first tunnel. Details are not described herein again.

In a scenario in which the third network device transmits the third packet based on the second tunnel, and the third packet exits the second tunnel through the first network device, optionally, the first network device further receives the third packet in which the second outer tunnel packet header is encapsulated. When the second outer tunnel packet header carries the mark information, the first network device decapsulates the second outer tunnel packet header in the third packet to obtain the fourth packet, where the mark information also indicates that the third packet passes through the loop breakpoint. The first network device transmits the fourth packet. The first network device discards the third packet when the second outer tunnel packet header does not carry the mark information.

According to the method provided in this embodiment of this application, when the network fault occurs in the ring network, the first packet can be quickly switched to the first tunnel for transmission by encapsulating the first outer tunnel packet header, so that the first packet is not affected by the network fault. Because the first tunnel is not blocked by the loop breakpoint in the ring network, the first packet can cross the loop breakpoint. In comparison with a path switching method in which a fault is notified and a forwarding table is refreshed, in the method, time for fault message notification and time for network device table refreshing are saved, ring network path switching is implemented more quickly, and a packet loss caused by the network fault is reduced, to effectively reduce impact of the network fault on service performance.

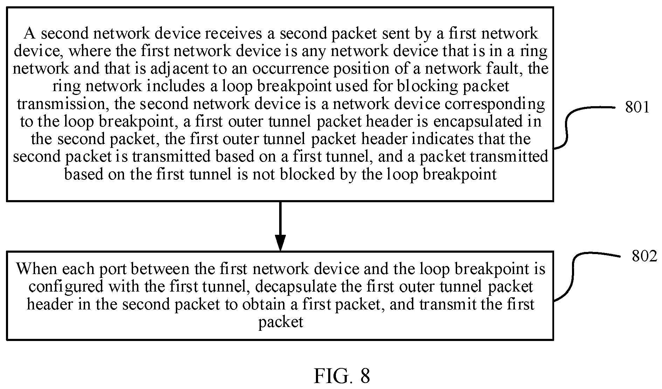

FIG. 8 is a flowchart of a packet transmission method according to an embodiment of this application. For example, the method is performed by a second network device. The second network device may be a network device that is in a ring network and for which a loop breakpoint is set. As shown in FIG. 8, the packet transmission method includes but is not limited to the following step 801 and step 802.

Step 801: The second network device receives a second packet sent by a first network device, where the first network device is any network device that is in the ring network and that is adjacent to an occurrence position of a network fault, the ring network includes the loop breakpoint used for blocking packet transmission, the second network device is a network device corresponding to the loop breakpoint, a first outer tunnel packet header is encapsulated in the second packet, the first outer tunnel packet header indicates that the second packet is transmitted based on a first tunnel, and a packet transmitted based on the first tunnel is not blocked by the loop breakpoint.

Step 802: When each port between the first network device and the loop breakpoint is configured with the first tunnel, decapsulate the first outer tunnel packet header in the second packet to obtain a first packet, and transmit the first packet.

In a possible implementation, after the second network device receives the second packet sent by the first network device, the method further includes: when each port of each network device in the ring network is configured with the first tunnel, or when each port between the first network device and a third network device is configured with the first tunnel through the loop breakpoint in the ring network, adding mark information to the first outer tunnel packet header to obtain a fifth packet, where the mark information indicates that the fifth packet passes through the loop breakpoint, and the third network device is another network device that is in the ring network and that is adjacent to the occurrence position of the network fault; and transmitting the fifth packet.

For implementations of step 801 and step 802, refer to the implementations related to the second network device in step 201 to step 203. Details are not described herein again.

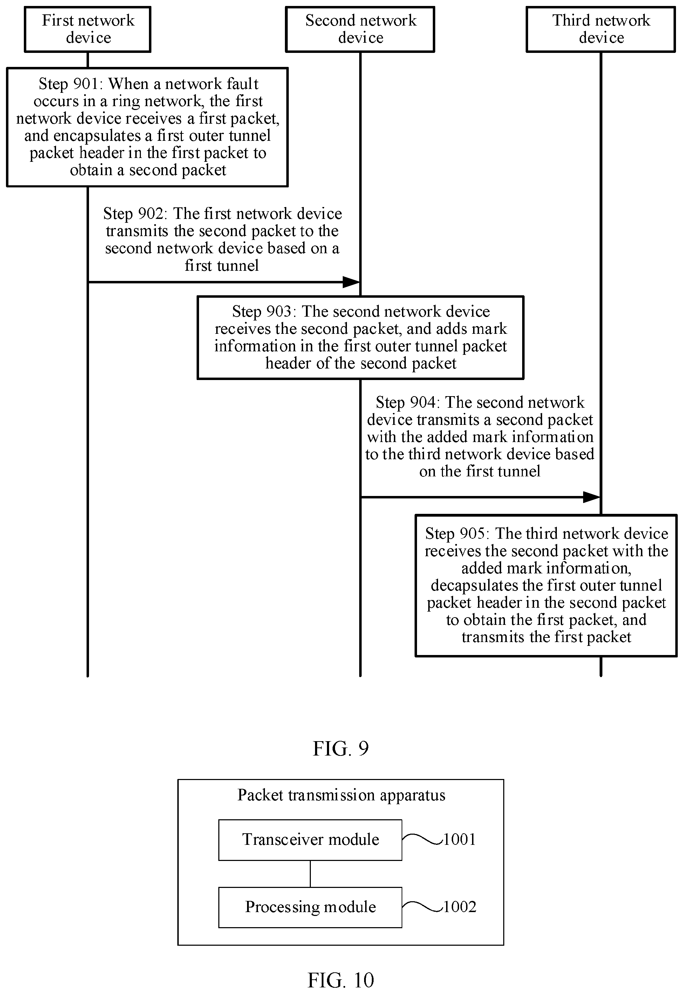

FIG. 9 is an interaction diagram of a packet transmission method according to an embodiment of this application. For example, the method is performed by a first network device, a second network device, and a third network device. The first network device and the third network device are two network devices that are in a ring network and that are adjacent to an occurrence position of a network fault, and the second network device is a network device that is in the ring network and for which a loop breakpoint is set. As shown in FIG. 9, the packet transmission method includes but is not limited to the following step 901 to step 905.

Step 901: When the network fault occurs in the ring network, the first network device receives a first packet, and encapsulates a first outer tunnel packet header in the first packet to obtain a second packet.

Step 902: The first network device transmits the second packet to the second network device based on a first tunnel.

Step 903: The second network device receives the second packet, and adds identification information to the first outer tunnel packet header of the second packet.

Step 904: The second network device transmits a second packet with the added identification information to the third network device based on the first tunnel.

Step 905: The third network device receives the second packet with the added identification information, decapsulates the first outer tunnel packet header in the second packet to obtain the first packet, and transmits the first packet.

For implementations of step 901 to step 905, refer to related descriptions in step 201 to step 203. Details are not described herein again.

The foregoing describes the packet transmission methods in embodiments of this application. In correspondence to the foregoing methods, an embodiment of this application further provides a packet transmission apparatus. FIG. 10 is a diagram of a structure of a packet transmission apparatus according to an embodiment of this application. Based on the following plurality of modules shown in FIG. 10, the packet transmission apparatus shown in FIG. 10 can perform all or some of operations performed by a first network device or a second network device. It should be understood that the apparatus may include more additional modules than the shown modules, or some shown modules may be omitted. This is not limited in this embodiment of this application.

When the packet transmission apparatus shown in FIG. 10 is used in the first network device, the first network device may be the first network device shown in FIG. 2 or FIG. 9. As shown in FIG. 10, the apparatus includes: a transceiver module 1001, configured to perform a receiving and/or sending-related operation performed by the first network device in the packet transmission method shown in FIG. 2 or FIG. 9; and a processing module 1002, configured to perform an operation other than the receiving and/or sending-related operation performed by the first network device in the packet transmission method shown in FIG. 2 or FIG. 9.

In a possible implementation, the transceiver module 1001 includes a receiving module and/or a sending module. The receiving module is configured to perform a receiving-related operation, and the sending module is configured to perform a sending-related operation.

In a possible implementation, the transceiver module 1001 is configured to: when a network fault occurs in a ring network, receive a first packet, where the first network device is any network device that is in the ring network and that is adjacent to an occurrence position of the network fault, and the ring network includes a loop breakpoint used for blocking packet transmission. The processing module 1002 is configured to encapsulate a first outer tunnel packet header in the first packet to obtain a second packet, where the first outer tunnel packet header indicates that the second packet is transmitted based on a first tunnel, and a packet transmitted based on the first tunnel is not blocked by the loop breakpoint. The transceiver module 1001 is further configured to transmit the second packet based on the first tunnel.

In a possible implementation, each port between the first network device and the loop breakpoint is configured with the first tunnel, or each port of each network device in the ring network is configured with the first tunnel. The transceiver module 1001 is configured to transmit, based on the first tunnel, the second packet to the second network device corresponding to the loop breakpoint, where the second network device is configured to decapsulate the first outer tunnel packet header in the second packet to obtain the first packet.

In a possible implementation, each port of each network device in the ring network is configured with the first tunnel, or each port between the first network device and a third network device is configured with the first tunnel through the loop breakpoint, and the third network device is another network device that is in the ring network and that is adjacent to the occurrence position of the network fault. The transceiver module 1001 is configured to transmit the second packet to the third network device through the loop breakpoint based on the first tunnel, where the third network device is configured to decapsulate the first outer tunnel packet header in the second packet to obtain the first packet.

In a possible implementation, the transceiver module 1001 is further configured to receive a third packet in which a second outer tunnel packet header is encapsulated, where the second outer tunnel packet header indicates that the third packet is transmitted based on a second tunnel, and a packet transmitted based on the second tunnel is not blocked by the loop breakpoint. The processing module 1002 is further configured to: when the second outer tunnel packet header carries mark information, decapsulate the second outer tunnel packet header in the third packet to obtain a fourth packet, where the mark information indicates that the third packet passes through the loop breakpoint. The transceiver module 1001 is further configured to transmit the fourth packet.

In a possible implementation, the processing module 1001 is further configured to discard the third packet when the second outer tunnel packet header does not carry the mark information.

In a possible implementation, the processing module 1001 is further configured to: before the network fault occurs in the ring network, receive configuration information of the first tunnel delivered by a control device, where the configuration information of the first tunnel is used for transmitting a packet based on the first tunnel; or the processing module 1001 is further configured to: when the network fault occurs in the ring network, receive configuration information of the first tunnel delivered by a control device.

When the packet transmission apparatus shown in FIG. 10 is used in the second network device, the second network device may be the second network device shown in FIG. 8 or FIG. 9. As shown in FIG. 10, the apparatus includes: a transceiver module 1001, configured to perform a receiving and/or sending-related operation performed by the second network device in the packet transmission method shown in FIG. 8 or FIG. 9; and a processing module 1002, configured to perform an operation other than the receiving and/or sending-related operation performed by the second network device in the packet transmission method shown in FIG. 8 or FIG. 9.

In a possible implementation, the transceiver module 1001 is configured to receive a second packet sent by a first network device, where the first network device is any network device that is in a ring network and that is adjacent to an occurrence position of a network fault, the ring network includes a loop breakpoint used for blocking packet transmission, the second network device is a network device corresponding to the loop breakpoint, a first outer tunnel packet header is encapsulated in the second packet, the first outer tunnel packet header indicates that the second packet is transmitted based on a first tunnel, and a packet transmitted based on the first tunnel is not blocked by the loop breakpoint. The processing module 1002 is configured to: when each port between the first network device and the loop breakpoint is configured with the first tunnel, decapsulate the first outer tunnel packet header in the second packet to obtain the first packet. The transceiver module 1001 is further configured to transmit the first packet.

In a possible implementation, the processing module 1002 is further configured to: when each port of each network device in the ring network is configured with the first tunnel, or when each port between the first network device and a third network device is configured with the first tunnel through the loop breakpoint in the ring network, add mark information to the first outer tunnel packet header to obtain a fifth packet, where the mark information indicates that the fifth packet passes through the loop breakpoint, and the third network device is another network device that is in the ring network and that is adjacent to the occurrence position of the network fault. The transceiver module 1001 is further configured to transmit the fifth packet.

In a possible implementation, the transceiver module 1001 is further configured to: before the network fault occurs in the ring network, receive configuration information of the first tunnel delivered by a control device, where the configuration information of the first tunnel is used for transmitting a packet based on the first tunnel; or the transceiver module 1001 is further configured to: when the network fault occurs in the ring network, receive configuration information of the first tunnel delivered by a control device.

It should be understood that, when the apparatus provided in FIG. 10 implements functions of the apparatus, division into the foregoing functional modules is merely used as an example for description. During actual application, the foregoing functions may be allocated to different functional modules for implementation based on a requirement. In other words, an internal structure of a device is divided into different functional modules, to implement all or some of the functions described above. In addition, the apparatus provided in the foregoing embodiments and the method embodiments belong to the same concept. For details of a specific implementation process, refer to the method embodiments. Details are not described herein again. For beneficial effects of the packet transmission apparatus shown in FIG. 10, refer to beneficial effects of the packet transmission method shown in FIG. 2. Details are not described herein again.

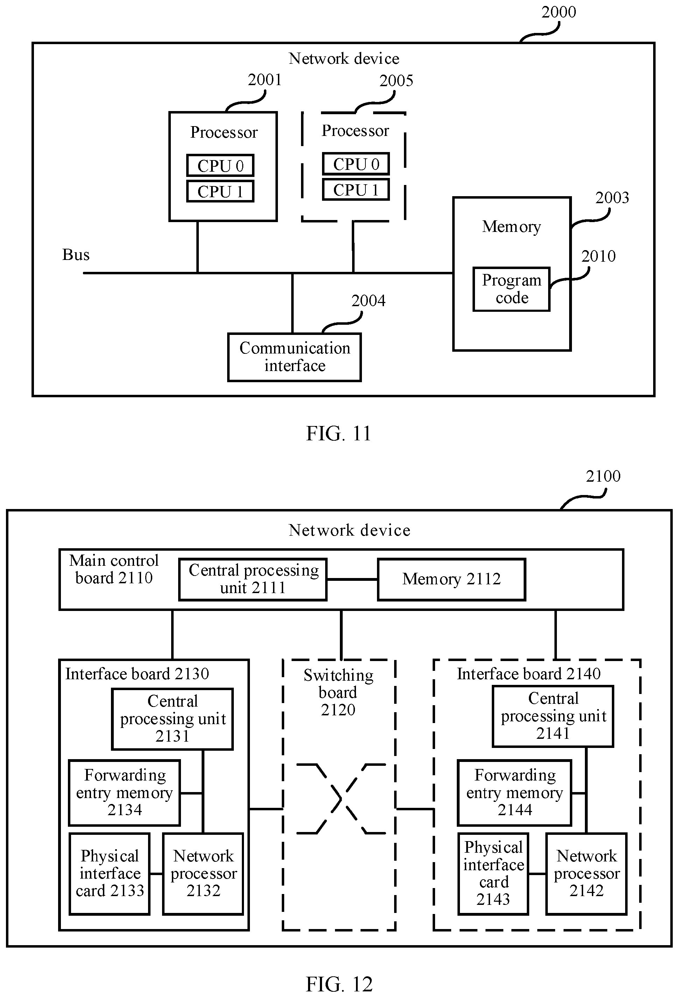

FIG. 11 is a diagram of a structure of a network device 2000 according to an example embodiment of this application. The network device 2000 shown in FIG. 11 is configured to perform an operation related to the packet transmission method shown in FIG. 2 or FIG. 8. The network device 2000 is, for example, a switch or a router. The network device 2000 may be implemented by using a general bus architecture.

As shown in FIG. 11, the network device 2000 includes at least one processor 2001, a memory 2003, and at least one communication interface 2004.

The processor 2001 is, for example, a general-purpose central processing unit (central processing unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solutions of this application. For example, the processor 2001 includes an application-specific integrated circuit (application-specific integrated circuit, ASIC), a programmable logic device (programmable logic device, PLD), or another programmable logic device, a transistor logic device, a hardware component, or any combination thereof. The PLD is, for example, a complex programmable logic device (complex programmable logic device, CPLD), a field-programmable gate array (field-programmable gate array, FPGA), a generic array logic (generic array logic, GAL), or any combination thereof. The processor 2001 may implement or execute various logical blocks, modules, and circuits described with reference to content disclosed in embodiments of the present invention. Alternatively, the processor may be a combination implementing a computing function, for example, a combination including one or more microprocessors, or a combination of the DSP and the microprocessor.

Optionally, the network device 2000 further includes a bus. The bus is configured to transmit information between components of the network device 2000. The bus may be a peripheral component interconnect (peripheral component interconnect, PCI for short) bus, an extended industry standard architecture (extended industry standard architecture, EISA for short) bus, or the like. Buses may be classified into an address bus, a data bus, a control bus, and the like. For ease of representation, the bus is represented by using only one line in FIG. 11. However, this does not indicate that there is only one bus or only one type of bus.

The memory 2003 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or another optical disk storage, an optical disk storage (including a compact disc, a laser disc, an optical disc, a digital versatile disc, a Blu-ray disc, or the like), a magnetic disk storage medium or another magnetic storage device, or any other medium that can be used to carry or store desired program code in a form of an instruction or a data structure and that can be accessed by a computer, but is not limited thereto. For example, the memory 2003 exists independently, and is connected to the processor 2001 through the bus. Alternatively, the memory 2003 and the processor 2001 may be integrated together.

The communication interface 2004 is any apparatus like a transceiver, and is configured to communicate with another device or a communication network. The communication network may be an Ethernet, a radio access network (radio access network, RAN), a wireless local area network (wireless local area network, WLAN), or the like. The communication interface 2004 may include a wired communication interface, and may further include a wireless communication interface. Specifically, the communication interface 2004 may be an Ethernet (Ethernet) interface, a fast Ethernet (Fast Ethernet, FE) interface, a gigabit Ethernet (Gigabit Ethernet, GE) interface, an asynchronous transfer mode (Asynchronous Transfer Mode, ATM) interface, a wireless local area network (wireless local area network, WLAN) interface, a cellular network communication interface, or a combination thereof. The Ethernet interface may be an optical interface, an electrical interface, or a combination thereof. In this embodiment of this application, the communication interface 2004 may be used by the network device 2000 to communicate with another device.

In a specific implementation, in an embodiment, the processor 2001 may include one or more CPUs, for example, a CPU 0 and a CPU 1 shown in FIG. 11. Each of the processors may be a single-core processor (single-core CPU), or may be a multi-core processor (multi-core CPU). The processor herein may be one or more devices, circuits, and/or processing cores configured to process data (for example, computer program instructions).

In a specific implementation, in an embodiment, the network device 2000 may include a plurality of processors, for example, the processor 2001 and a processor 2005 in FIG. 11. Each of the processors may be a single-core processor (single-core CPU), or may be a multi-core processor (multi-core CPU). The processor herein may be one or more devices, circuits, and/or processing cores configured to process data (for example, computer program instructions).

In a specific implementation, in an embodiment, the network device 2000 may further include an output device and an input device. The output device communicates with the processor 2001, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector

(projector). The input device communicates with the processor 2001, and may receive a user input in a plurality of manners. For example, the input device may be a mouse, a keyboard, a touchscreen device, or a sensor device.

In some embodiments, the memory 2003 is configured to store program code 2010 for executing the solutions in this application, and the processor 2001 may execute the program code 2010 stored in the memory 2003. In other words, the network device 2000 may implement, by using the processor 2001 and the program code 2010 in the memory 2003, the packet transmission methods provided in the method embodiments. The program code 2010 may include one or more software modules. Optionally, the processor 2001 may also store program code or instructions for executing the solutions of this application.

In a specific embodiment, the network device 2000 in this embodiment of this application may correspond to the first network device in the foregoing method embodiments, and the processor 2001 in the network device 2000 reads instructions in the memory 2003, so that the network device 2000 shown in FIG. 11 can perform all or some of operations performed by the first network device.

Specifically, the processor 2001 is configured to enable a first network device to: when a network fault occurs in a ring network, receive a first packet, where the first network device is any network device that is in the ring network and that is adjacent to an occurrence position of the network fault, the ring network includes a loop breakpoint used for blocking packet transmission; encapsulate a first outer tunnel packet header in the first packet to obtain a second packet, where the first outer tunnel packet header indicates that the second packet is transmitted based on a first tunnel, and a packet transmitted based on the first tunnel is not blocked by the loop breakpoint; and transmit the second packet based on the first tunnel.

For brevity, another optional implementation is not described herein again.

For another example, the network device 2000 in this embodiment of this application may correspond to the second network device in the foregoing method embodiments, and the processor 2001 in the network device 2000 reads instructions in the memory 2003, so that the network device 2000 shown in FIG. 11 can perform all or some of operations performed by the second network device.

Specifically, the processor 2001 is configured to: receive a second packet sent by a first network device, where the first network device is any network device that is in a ring network and that is adjacent to an occurrence position of a network fault, the ring network includes a loop breakpoint used for blocking packet transmission, the second network device is a network device corresponding to the loop breakpoint, a first outer tunnel packet header is encapsulated in the second packet, the first outer tunnel packet header indicates that the second packet is transmitted based on a first tunnel, and a packet transmitted based on the first tunnel is not blocked by the loop breakpoint; when each port between the first network device and the loop breakpoint is configured with the first tunnel, decapsulate the first outer tunnel packet header in the second packet to obtain the first packet; and transmit the first packet.

For brevity, another optional implementation is not described herein again.

The network device 2000 may further correspond to the packet transmission apparatus shown in FIG. 10, and each functional module in the packet transmission apparatus is implemented by using software of the network device 2000. In other words, the functional module included in the packet transmission apparatus is generated after the processor 2001 of the network device 2000 reads the program code 2010 stored in the memory 2003.

The steps of the packet transmission method shown in FIG. 2 or FIG. 8 are completed by using an integrated logic circuit of hardware in the processor of the network device 2000 or instructions in a form of software. The steps of the method disclosed with reference to embodiments of this application may be directly performed and completed by a hardware processor, or may be performed and completed by using a combination of hardware and software modules in the processor. A software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps of the foregoing methods in combination with hardware of the processor. To avoid repetition, details are not described herein again.

FIG. 12 is a diagram of a structure of a network device 2100 according to another example embodiment of this application. The network device 2100 shown in FIG. 12 is configured to perform all or some of operations related to the packet transmission method shown in FIG. 2 or FIG. 8 above. The network device 2100 is, for example, a switch or a router. The network device 2100 may be implemented by using a general bus architecture.

As shown in FIG. 12, the network device 2100 includes a main control board 2110 and an interface board 2130.

The main control board is also referred to as a main processing unit (main processing unit, MPU) or a route processor card (route processor card). The main control board 2110 is configured to control and manage each component in the network device 2100, including functions of route calculation, device management, device maintenance, and protocol processing. The main control board 2110 includes a central processing unit 2111 and a memory 2112.

The interface board 2130 is also referred to as a line interface unit (line processing unit, LPU), a line card (line card), or a service board. The interface board 2130 is configured to: provide various service interfaces and implement data packet forwarding. The service interfaces include but are not limited to an Ethernet interface, a POS (Packet over SONET/SDH) interface, and the like. The Ethernet interface is, for example, a flexible Ethernet service interface (Flexible Ethernet Clients, FlexE Clients). The interface board 2130 includes a central processing unit 2131, a network processor 2132, a forwarding entry memory 2134, and a physical interface card (physical interface card, PIC) 2133.

The central processing unit 2131 on the interface board 2130 is configured to control and manage the interface board 2130 and communicate with the central processing unit 2111 on the main control board 2110.

The network processor 2132 is configured to implement packet forwarding processing. A form of the network processor 2132 may be a forwarding chip. The forwarding chip may be a network processor (network processor, NP). In some embodiments, the forwarding chip may be implemented by using an application-specific integrated circuit (application-specific integrated circuit, ASIC) or a field-programmable gate array (field-programmable gate array, FPGA). Specifically, the network processor 2132 is configured to forward a received packet based on a forwarding table stored in the forwarding entry memory 2134. If a destination address of the packet is an address of the network device 2100, the network processor 2132 sends the packet to a CPU (for example, the central processing unit 2131) for processing. If a destination address of the packet is not an address of the network device 2100, the network processor 2132 finds, from the forwarding table based on the destination address, a next hop and an egress interface that correspond to the destination address, and forwards the packet to the egress interface corresponding to the destination address. Processing of an uplink packet may include: processing of an inbound interface of the packet and forwarding table lookup; and processing of a downlink packet may include: forwarding table lookup and the like. In some embodiments, the central processing unit may also perform a function of a forwarding chip, for example, implement software forwarding based on a general-purpose CPU, so that no forwarding chip is required in the interface board.

The physical interface card 2133 is configured to implement a physical layer interconnection function, so that original traffic enters the interface board 2130 from the physical interface card 2133, and a processed packet is sent out from the physical interface card 2133. The physical interface card 2133 is also referred to as a subcard, may be installed on the interface board 2130, and is responsible for converting an optical/electrical signal into a packet, performing validity check on the packet, and then forwarding the packet to the network processor 2132 for processing. In some embodiments, the central processing unit 2131 may also perform a function of the network processor 2132, for example, implement software forwarding based on a general-purpose CPU. Therefore, the network processor 2132 is not required in the physical interface card 2133.

Optionally, the network device 2100 includes a plurality of interface boards. For example, the network device 2100 further includes an interface board 2140. The interface board 2140 includes a central processing unit 2141, a network processor 2142, a forwarding entry memory 2144, and a physical interface card 2143. Functions and implementations of components in the interface board 2140 are the same as or similar to those of the interface board 2130. Details are not described herein again.

Optionally, the network device 2100 further includes a switching board 2120. The switching board 2120 may also be referred to as a switch fabric unit (switch fabric unit, SFU). When the network device 2100 has the plurality of interface boards, the switching board 2120 is configured to perform data exchange between the interface boards. For example, the interface board 2130 and the interface board 2140 may communicate with each other by using the switching board 2120.

The main control board 2110 is coupled to the interface board. For example, the main control board 2110, the interface board 2130, the interface board 2140, and the switching board 2120 are connected to a system backboard by using a system bus for interworking. In a possible implementation, an inter-process communication (inter-process communication, IPC) channel is established between the main control board 2110 and the interface board 2130 and between the main control board 2110 and the interface board 2140, and communication between the main control board 2110 and the interface board 2130 and between the main control board 2110 and the interface board 2140 is performed through the IPC channel.

Logically, the network device 2100 includes a control plane and a forwarding plane. The control plane includes the main control board 2110 and the central processing unit 2111. The forwarding plane includes components such as the forwarding entry memory 2134, the physical interface card 2133, and the network processor 2132 that perform forwarding. The control plane performs functions such as a router, generating a forwarding table, processing signaling and protocol packets, and configuring and maintaining a state of the network device. The control plane delivers the generated forwarding table to the forwarding plane. On the forwarding plane, the network processor 2132 searches, based on the forwarding table delivered by the control plane, a table for forwarding the packet received by the physical interface card 2133. The forwarding table delivered by the control plane may be stored in the forwarding entry memory 2134. In some embodiments, the control plane and the forwarding plane may be completely separated, and are not on a same network device.

It should be noted that there may be one or more main control boards, and when there are a plurality of main control boards, a primary main control board and a secondary main control board may be included. There may be one or more interface boards. A network device with a stronger data processing capability provides a larger quantity of interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need a switching board, and the interface board provides a function of processing service data of an entire system. In a distributed forwarding architecture, the network device may have at least one switching board, and data exchange between a plurality of interface boards is implemented by using the switching board, to provide a large-capacity data exchange and processing capability. Therefore, a data access and processing capability of the network device in the distributed architecture is greater than that of the network device in the centralized architecture. Optionally, a form of the network device may alternatively be a single board. That is, there is no switching board, and functions of the interface board and the main control board are integrated into the board. In this case, the central processing unit on the interface board and the central processing unit on the main control board may be combined into one central processing unit on the board. The one central processing unit on the board performs functions of the two central processing units existing after the two central processing units are combined. The network device in this form has a low data exchange and processing capability (for example, a network device like a low-end switch or router). A specific architecture that is to be used depends on a specific networking deployment scenario. This is not limited herein.

In a specific embodiment, the network device 2100 corresponds to the packet transmission apparatus shown in FIG. 10 used in a first network device or a second network device. In some embodiments, the transceiver module 1001 in the packet transmission apparatus shown in FIG. 10 is equivalent to the physical interface card 2133 in the network device 2100, and the processing module 1002 is equivalent to the central processing unit 2111 or the network processor 2132 in the network device 2100.

An embodiment of this application further provides a packet transmission system. The system includes a first network device and a second network device. For example, the first network device is the network device 2000 shown in FIG. 11 or the network device 2100 shown in FIG. 12, and the second network device is the network device 2000 shown in FIG. 11 or the network device 2100 shown in FIG. 12. For packet transmission methods performed by the first network device and the second network device, refer to related descriptions in the embodiments shown in FIG. 2 and FIG. 8. Details are not described herein again.

An embodiment of this application further provides a communication apparatus. The apparatus includes a transceiver, a memory, and a processor. The transceiver, the memory, and the processor communicate with each other by using an internal connection path. The memory is configured to store instructions. The processor is configured to execute the instructions stored in the memory, to control the transceiver to receive a signal and control the transceiver to send a signal. In addition, when the processor executes the instructions stored in the memory, the processor is enabled to perform the method that needs to be performed by the first network device.

An embodiment of this application further provides a communication apparatus. The apparatus includes a transceiver, a memory, and a processor. The transceiver, the memory, and the processor communicate with each other by using an internal connection path. The memory is configured to store instructions. The processor is configured to execute the instructions stored in the memory, to control the transceiver to receive a signal and control the transceiver to send a signal. In addition, when the processor executes the instructions stored in the memory, the processor is enabled to perform the method that needs to be performed by the second network device.

It should be understood that the processor may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, any conventional processor, or the like. It should be noted that the processor may be a processor that supports an advanced reduced instruction set computing machine (advanced RISC machines, ARM) architecture.

Further, in an optional embodiment, the memory may include a read-only memory and a random access memory, and provide instructions and data for the processor. The memory may further include a non-volatile random access memory. For example, the memory may further store information of a device type.

The memory may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than limited description, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a computer-readable storage medium. The storage medium stores at least one instruction, and the instruction is loaded and executed by a processor, to enable a computer to implement any one of the foregoing packet transmission methods.

An embodiment of this application further provides a computer program (product). When the computer program is executed by a computer, a processor or the computer may be enabled to perform corresponding steps and/or procedures in the foregoing method embodiments.

An embodiment of this application further provides a chip, including a processor. The processor is configured to invoke, from a memory, instructions stored in the memory and run the instructions, to enable a communication device on which the chip is installed to perform any one of the foregoing packet transmission methods.

An embodiment of this application further provides another chip, including an input interface, an output interface, a processor, and a memory. The input interface, the output interface, the processor, and the memory are connected to each other through an internal connection path. The processor is configured to execute code in the memory, and when the code is executed, the processor is configured to perform any one of the foregoing packet transmission methods.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to this application are completely or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive)), or the like.

A person of ordinary skill in the art may be aware that, method steps and modules described with reference to embodiments disclosed in this specification can be implemented by using software, hardware, firmware, or any combination thereof. To clearly describe interchangeability between the hardware and the software, steps and compositions of embodiments have been generally described in terms of functions in the foregoing descriptions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

A person of ordinary skill in the art may understand that all or some of the steps of embodiments may be implemented by using hardware or a program instructing related hardware. The program may be stored in a computer-readable storage medium. The storage medium may include: a read-only memory, a magnetic disk, or an optical disc.

When software is used to implement the embodiments, all or some of the embodiments may be implemented in a form of a computer program product. The computer program product includes one or more computer program instructions. In an example, the method according to embodiments of this application may be described in the context of machine-executable instructions. For example, the machine-executable instructions are included in a program module that is in a component for execution on a real or virtual processor of a target. Generally, the program module includes a routine, a program, a library, an object, a class, a component, a data structure, and the like, and executes a specific task or implements a specific abstract data structure. In various embodiments, the functions of the program modules may be combined or split between the described program modules. The machine-executable instructions for the program module may be executed locally or within a distributed device. In the distributed device, the program module may be located in both a local storage medium and a remote storage medium.

Computer program code for implementing the method in embodiments of this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as an independent software package, partly on a computer and partly on a remote computer, or entirely on a remote computer or a server.

In the context of embodiments of this application, the computer program code or related data may be carried in any appropriate carrier, so that the device, the apparatus, or the processor can perform various processes and operations described above. Examples of the carrier include a signal, a computer-readable medium, and the like.

Examples of the signal may include an electrical signal, an optical signal, a radio signal, a voice signal, or other forms of propagated signals, such as a carrier wave and an infrared signal.

A machine-readable medium may be any tangible medium that includes or stores programs for or with respect to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more wires, a portable computer disk, a hard disk drive, a random access memory (RAM), a read-only memory (ROM), an erasable programmable read-only memory (EPROM or flash memory), an optical storage device, a magnetic storage device, or any appropriate combination thereof.

It may be clearly understood by a person skilled in the art that, for the purpose of convenient and brief description, for a detailed working process of the foregoing system, device, and module, refer to a corresponding process in the foregoing method embodiments. Details are not described herein again.

In the several embodiments provided in this application, it should be understood that the disclosed system, device, and method may be implemented in other manners. For example, the described device embodiments are merely an example. For example, division of modules is merely division of logical functions and there may be other division during actual implementation. For example, a plurality of modules or components may be combined or may be integrated to another system, or some features may be ignored or not performed. In addition, the displayed or discussed mutual couplings or direct couplings or communication connections may be indirect couplings or communication connections implemented through some interfaces, devices, or modules, or may be electrical, mechanical, or other forms of connection.

The modules described as separate parts may or may not be physically separate, and parts displayed as modules may or may not be physical modules, to be specific, may be located at one position, or may be distributed on a plurality of network modules. Some or all of the modules may be selected based on actual requirements to implement the objectives of the solutions of embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

If the integrated module is implemented in a form of a software functional module and sold or used as an independent product, the integrated module may be stored in a computer-readable storage medium. Based on this understanding, the technical solutions of this application essentially, or the part contributing to a conventional technology, or all or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a portable hard drive, a read-only memory (read-only memory, ROM), a random access memory (random access memory, RAM), a magnetic disk, or an optical disc.

The terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should also be understood that although the following descriptions use terms such as "first" and "second" to describe various elements, these elements should not be limited by the terms. These terms are simply used to distinguish one element from another. For example, without departing from the scope of various examples, a first image may be referred to as a second image, and similarly, the second image may be referred to as the first image. Both the first image and the second image may be images, and in some cases, may be separate and different images.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

In this application, the term "at least one" means one or more, and the term "a plurality of" in this application means two or more. For example, a plurality of second packets means two or more second packets. The terms "system" and "network" are often used interchangeably in this specification.

It should be understood that the terms used in the descriptions of the various examples herein are merely intended to describe specific examples, but are not intended to impose a limitation. The terms "one" ("a" and "an") and "the" of singular forms used in the descriptions of the various examples and the appended claims are also intended to include plural forms, unless otherwise specified in the context clearly.

It should be further understood that the term "and/or" used in this specification indicates and includes any combination and all possible combinations of one or more of the associated listed items. The term "and/or" describes an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or components thereof not excluded.

It should be further understood that the terms "if" and "if" may be interpreted to mean "when" ("when" or "upon") or "in response to determining" or "in response to detecting". Similarly, based on the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

It should be understood that determining B based on A does not mean that B is determined based only on A, and B may alternatively be determined based on A and/or other information.

It should be further understood that "one embodiment", "an embodiment", and "a possible implementation" mentioned throughout this specification mean that a specific feature, structure, or characteristic related to the embodiment or an implementation is included in at least one embodiment of this application. Therefore, "in one embodiment" or "in an embodiment" or "a possible implementation" appearing throughout this specification may not necessarily refer to a same embodiment. In addition, these particular features, structures, or characteristics may be combined in one or more embodiments in any appropriate manner.

The foregoing descriptions are merely optional embodiments of this application, but are not intended to limit this application. Any modification, equivalent replacement, or improvement made within the principle of this application should fall within the protection scope of this application.

## Claims

1. A packet transmission method, wherein the method comprises:
when a network fault occurs in a ring network, receiving, by a first network device, a first packet, wherein the first network device is any network device that is in the ring network and that is adjacent to an occurrence position of the network fault, and the ring network comprises a loop breakpoint used for blocking packet transmission;
encapsulating a first outer tunnel packet header in the first packet to obtain a second packet, wherein the first outer tunnel packet header indicates that the second packet is transmitted based on a first tunnel, and a packet transmitted based on the first tunnel is not blocked by the loop breakpoint; and
transmitting the second packet based on the first tunnel.

2. The method according to claim 1, wherein each port between the first network device and the loop breakpoint is configured with the first tunnel, or each port of each network device in the ring network is configured with the first tunnel; and
transmitting the second packet based on the first tunnel comprises:
transmitting, based on the first tunnel, the second packet to a second network device corresponding to the loop breakpoint, wherein the second network device is configured to decapsulate the first outer tunnel packet header in the second packet to obtain the first packet.

3. The method according to claim 1, wherein each port of each network device in the ring network is configured with the first tunnel, or each port between the first network device and a third network device is configured with the first tunnel through the loop breakpoint, and the third network device is another network device that is in the ring network and that is adjacent to the occurrence position of the network fault; and
transmitting the second packet based on the first tunnel comprises:
transmitting the second packet to the third network device based on the first tunnel through the loop breakpoint, wherein the third network device is configured to decapsulate the first outer tunnel packet header in the second packet to obtain the first packet.

4. The method according to claim 1 or 3, wherein the method further comprises:
receiving a third packet in which a second outer tunnel packet header is encapsulated, wherein the second outer tunnel packet header indicates that the third packet is transmitted based on a second tunnel, and a packet transmitted based on the second tunnel is not blocked by the loop breakpoint;
when the second outer tunnel packet header carries mark information, decapsulating the second outer tunnel packet header in the third packet to obtain a fourth packet, wherein the mark information indicates that the third packet passes through the loop breakpoint; and
transmitting the fourth packet.

5. The method according to claim 4, wherein the method further comprises:
discarding the third packet when the second outer tunnel packet header does not carry the mark information.

6. A packet transmission method, wherein the method comprises:
receiving, by a second network device, a second packet sent by a first network device, wherein the first network device is any network device that is in a ring network and that is adjacent to an occurrence position of a network fault, the ring network comprises a loop breakpoint used for blocking packet transmission, the second network device is a network device corresponding to the loop breakpoint, a first outer tunnel packet header is encapsulated in the second packet, the first outer tunnel packet header indicates that the second packet is transmitted based on a first tunnel, and a packet transmitted based on the first tunnel is not blocked by the loop breakpoint;
when each port between the first network device and the loop breakpoint is configured with the first tunnel, decapsulating the first outer tunnel packet header in the second packet to obtain a first packet; and
transmitting the first packet.

7. The method according to claim 6, wherein after receiving, by the second network device, the second packet sent by the first network device, the method further comprises:
when each port of each network device in the ring network is configured with the first tunnel, or when each port between the first network device and a third network device is configured with the first tunnel through the loop breakpoint in the ring network, adding mark information to the first outer tunnel packet header to obtain a fifth packet, wherein the mark information indicates that the fifth packet passes through the loop breakpoint, and the third network device is another network device that is in the ring network and that is adjacent to the occurrence position of the network fault; and
transmitting the fifth packet.

8. The method according to any one of claims 1 to 7, wherein the method further comprises:
before the network fault occurs in the ring network, receiving configuration information of the first tunnel delivered by a control device, wherein the configuration information of the first tunnel is used for transmitting a packet based on the first tunnel; or
when the network fault occurs in the ring network, receiving configuration information of the first tunnel delivered by the control device.

9. A packet transmission apparatus, wherein the apparatus comprises:
a transceiver module, configured to perform a receiving and/or sending-related operation performed by the first network device in the method according to any one of claims 1 to 5 and 8, or configured to perform a receiving and/or sending-related operation performed by the second network device in the method according to any one of claims 6 to 8; and
a processing module, configured to perform an operation other than the receiving and/or sending-related operation performed by the first network device in the method according to any one of claims 1 to 5 and 8, or configured to perform an operation other than the receiving and/or sending-related operation performed by the second network device in the method according to any one of claims 6 to 8.

10. A network device, wherein the network device comprises a processor, the processor is coupled to a memory, the memory stores at least one program instruction or code, and the at least one program instruction or the code is loaded and executed by the processor, to enable the network device to implement the packet transmission method according to any one of claims 1 to 5 and 8, or to enable the network device to implement the packet transmission method according to any one of claims 6 to 8.

11. A packet transmission system, wherein the packet transmission system comprises a first network device and a second network device,
the first network device is configured to perform the packet transmission method according to any one of claims 1 to 5 and 8, and the second network device is configured to perform the packet transmission method according to any one of claims 6 to 8.

12. A computer-readable storage medium, wherein the computer-readable storage medium stores at least one instruction, and the at least one instruction is loaded and executed by a processor, to enable a computer to implement the packet transmission method according to any one of claims 1 to 5 and 8, or to enable a computer to implement the packet transmission method according to any one of claims 6 to 8.

13. A computer program product, wherein the computer program product comprises computer program code, and the computer program code is loaded and executed by a computer, to enable the computer to implement the packet transmission method according to any one of claims 1 to 5 and 8, or to enable the computer to implement the packet transmission method according to any one of claims 6 to 8.
